# EUROPÄISCHE PATENTANMELDUNG

(11) **EP 1 593 614 A2**
(43) Veröffentlichungstag der Anmeldung: **09.11.2005**
(21) Anmeldenummer: 05008113.2
(22) Anmeldetag: 14.04.2005
(51) Int. Cl.: B65G 1/02, B65G 1/06, B65G 65/00

(54) **Speichervorrichtung für Säcke oder Schlauchabschnitte**

(30) Priorität: 04.05.2004 DE 102004022294
(71) Anmelder: Windmöller & Hölscher KG, 49525 Lengerich (DE)
(72) Erfinder: Welp, Hans-Dieter, 49525 Lengerich (DE); Schrödter, Andreas, 49549 Ladbergen (DE)

(57) **Zusammenfassung**

Die Erfindung beschreibt eine Speichervorrichtung (3) für Säcke oder Schlauchabschnitte, welche in der Regel als Stapel der Speichervorrichtung (3) zugeführt werden, wobei die Speichervorrichtung (3) zumindest zwei Etagen (16), in denen die Säcke oder Schlauchabschnitte (8) gespeichert werden sowie ein erstes Transportsystem zum Bewegen der Säcke oder Schlauchabschnitte (8) in den Etagen (16) und ein zweites Transportsystem (14,22) zum Heran- und Wegführen von Säcken oder Schlauchabschnitten (8) zu oder von den Etagen (16) aufweist.

Das erste Transportsystem weist unendlich umlaufende Transportelemente (18) auf.

## Beschreibung

Die Erfindung betrifft eine Speichervorrichtung für Säcke oder Schlauchabschnitte nach dem Oberbegriff des Patentanspruchs 1.

Zur Herstellung von Säcken werden in der Regel zunächst in so genannten Schlauchmaschinen auf sehr rationelle Weise Endlosschläuche gebildet. Dazu werden eine oder mehrere übereinander gelegte Bahnen aus Papier oder Kunststoff zu einem Schlauch zusammengelegt und die nun übereinander liegenden Bahnränder mit geeigneten Fügemitteln, zum Beispiel Klebstoff, verbunden. Im Anschluss an die Schlauchbildung wird der Schlauch zu Schlauchstücken vereinzelt und einzeln oder vorzugsweise in Stapeln abtransportiert. Vorrichtungen zur Bildung derartiger Schlauchstücke werden beispielsweise in den Druckschriften DE 36 40 219 C1 und DE 44 40 660 C2 offenbart.

Die derart produzierten Schlauchstücke werden häufig einer weiteren Vorrichtung, der Bodenbildungsvorrichtung, zugeführt, in welcher diese zu Beuteln oder Säcken weiterverarbeitet werden. Dazu wird an zumindest einem Ende eines Schlauchstücks ein Boden angeformt. So sind beispielsweise derartige Vorrichtungen zur Bildung von Kreuzbodenventilsäcken bekannt, in denen den Schlauchstücken sogar beidendig Böden angeformt werden. Die Patentschrift DE 195 49 618 C2 zeigt das Aufziehen der Enden eines Schlauchstücks.

Eine derartige Bodenbildungsvorrichtung arbeitet insbesondere dann ohne Störungen, wenn die Schlauchstücke möglichst flach sind. In der Praxis sind solche Schlauchstücke jedoch, insbesondere im Bereich der Fügenaht, stark gewellt, was darauf zurück zu führen ist, dass das Fügematerial beim Verlassen der Schlauchmaschine noch nicht ausreichend abgetrocknet ist. Dies ist insbesondere bei der Verwendung von stark feuchtigkeitshaltigem Stärkeleim der Fall. Daher ist man in der Vergangenheit dazu übergegangen, die Schlauchstücke vor der Weiterverarbeitung in einer Speicher- oder Lagervorrichtung zwischen zu lagern. Während der Speicherdauer werden die Schlauchstücke, welche häufig als Stapel in einer solchen Speichervorrichtung abgelegt werden, mit einer Pressplatte belegt, so dass die Schlauchstücke während des Abtrocknens oder des Aushärtens des Fügematerials eine möglichst ebene Lage einnehmen und diese auch nach Verlassen der Speichervorrichtung beibehalten.

Die Offenlegungsschrift DE 43 33 906 A1 zeigt eine solche Speichervorrichtung. Diese Vorrichtung weist mehrere Etagen auf, auf welchen die Schlauchstücke mittels einer der Beschickungs- und Entnahmevorrichtungen abgelegt werden. Diese Beschickungs- und Entnahmevorrichtung besteht aus einem Greifer, welcher Bestandteil eines ersten, teleskopartigen Transportsystems ist und welcher die Schlauchstücke, Säcke oder Stapel aus selbigem ergreifen und in einer Horizontalbewegung auf einer Speicherstelle innerhalb einer Etage ablegen kann. Um die einzelnen Etagen zu erreichen, ist das erste Transportsystem einem zweiten Transportsystem zugeordnet, welches für eine Vertikalbewegung sorgt. Jeder Etage ist zudem eine Pressplatte zugeordnet, mit welcher die Schlauchstücke verpresst werden und welche zum Zu- oder Abführen der Säcke oder Schlauchabschnitte angehoben und abgesenkt werden kann.

Als nachteilig erweist sich allerdings, dass der Greifer der ersten Transportvorrichtung weit in die Etagen hineinragen muss, um die Schlauchabschnitte oder auch die fertigen Säcke in den Etagen anordnen und ablegen zu können. Diese teleskopierende Horizontalbewegung kostet relativ viel Zeit. Damit ist das Zu- und Abführen der Säcke oder Schlauchabschnitte zu ihren Lagerplätzen sehr ineffektiv. Außerdem muss ein solches teleskopartiges Transportsystem mechanisch sehr stabil und damit sehr aufwändig ausgeführt sein, um bei großen Transportwegen das auftretende Drehmoment abfangen zu können.

Die Aufgabe der vorliegenden Erfindung ist es daher, eine Speichervorrichtung für Säcke oder Schlauchabschnitte vorzuschlagen, in welchen die Säcke oder Schlauchabschnitte den Speicherplätzen effektiver zugeführt werden können und welche mechanisch einfacher ausgeführt ist.

Erfindungsgemäß wird diese Aufgabe durch die Merkmale des kennzeichnenden Teils des Anspruchs 1 gelöst.

Demnach zeichnet sich die vorliegende Erfindung dadurch aus, dass das erste Transportsystem unendlich umlaufende Transportelemente ausweist. Diese Transportelemente können als Rollen, Bänder oder als Transportriemen ausgestaltet sein. Das erste Transportsystem braucht somit keine teleskopartige Bewegung mehr auszuführen. Auch die zum Ergreifen und Loslassen der Säcke oder Schlauchabschnitte notwendigen Bewegungen des Greifers entfallen. Ein Transportriemen ist dabei in der Regel endlich ausgeführt, wobei die Enden Haken und/oder Ösen aufweisen. Zur Bildung eines unendlich umlaufenden Transportelementes werden die beiden Enden zusammengefügt, indem die Haken an beiden Enden ineinander gehakt werden oder eine Stange, ein Draht oder ähnliches durch sämtliche Ösen geführt wird.

Die unendlich umlaufenden Transportelemente des ersten Transportsystems sind vorteilhafterweise auf dem Etagenboden angeordnet. Die Säcke oder Schlauchabschnitte brauchen dann nur von dem zweiten Transportsystem, etwa einem Hublift, welcher die gewünschte Etage anfährt, an den Etagenboden übergeben zu werden. Die Transportelemente können dann die Schlauchabschnitte oder Säcke an die gewünschten Speicherstellen transportieren, während das zweite Transportsystem bereits weitere Säcke oder Schlauchabschnitte aufnehmen kann. Besonders vorteilhaft ist die Verwendung eines weiteren zweiten Transportsystems, mit welchem ebenfalls Säcke oder Schlauchstücke den Etagen zu- oder von den Etagen weggeführt werden können. Eines der Transportsysteme dient dann in bevorzugter Weise der Zuführung von Säcken oder Schlauchstücken, während das weitere Transportsystem der Wegführung der Säcke oder Schlauchstücke dient. Das erste Transportsystem braucht dann die Säcke oder Schlauchstücke immer nur in eine Transportrichtung zu transportieren, wenn die genannten Transportsysteme gegenüberliegend angeordnet sind.

An der Übergabestelle zwischen dem ersten und dem zweiten Transportsystem kann ein größerer Spalt auftreten, in welchen die Säcke, vor allem aber Schlauchabschnitte, welche leicht in sich zusammensacken können, hineinrutschen können. Um dies zu vermeiden, können eine oder mehrere Bürstenwalzen zum Ausfüllen des Spalts vorhanden sein, welche bevorzugt an dem zweiten Transportsystem angebracht sind. Beim Verfahren des zweiten Transportsystems können die Borsten der Bürstenwalze oder -walzen von Hindernissen beiseite gedrückt werden.

Ein besonderes Problem ergibt sich, wenn eine Etage nicht ganz gefüllt ist und die Pressplatte dann durch ungleichmäßige Krafteinwirkungen durch die Schlauchabschnitte oder Säcke aus der zum Etagenboden parallelen Ebene kippt und dann möglicherweise nicht alle Säcke oder Schlauchabschnitte gleichmäßig verpresst. Daher ist eine Vorrichtung zur Steuerung der Bewegung des Pressplatte vorgesehen, die die Pressbewegung unterbricht, wenn die Säcke oder Schlauchstücke eine Gegenkraft auf die Pressplatte ausüben, welche über die Auflagefläche der Pressplatte variiert. Damit ist sichergestellt, dass die Pressplatte im Wesentlichen parallel zum Etagenboden verbleibt. Wenn der Etagenboden waagerecht verläuft, so kann die Abweichung der Pressplatte aus der zum Etagenboden parallelen Ebene auf einfache Weise über entsprechende Mittel, beispielsweise eine elektronische Wasserwaage, bestimmt und diese Informationen der Steuerung zugeführt werden. Ein Bestimmen der durch die Säcke oder Schlauchabschnitte aufgebrachten Gegenkräfte kann dann entfallen.

Weitere Ausführungsbeispiele der Erfindung gehen aus der gegenständlichen Beschreibung und den Ansprüchen hervor. Die einzelnen Figuren zeigen:
- Fig. 1: Draufsicht auf eine Ausführungsform des erfindungsgemäßen Systems.
- Fig. 2: Draufsicht auf eine zweite Ausführungsform des erfindungsgemäßen Systems.
- Fig. 3: Seitenansicht einer erfindungsgemäßen Speichervorrichtung.
- Fig. 4: Seitenansicht einer Vorrichtung zum Anheben und Absenken der Pressplatte.
- Fig. 5: Draufsicht auf die Vorrichtung aus Figur 4.

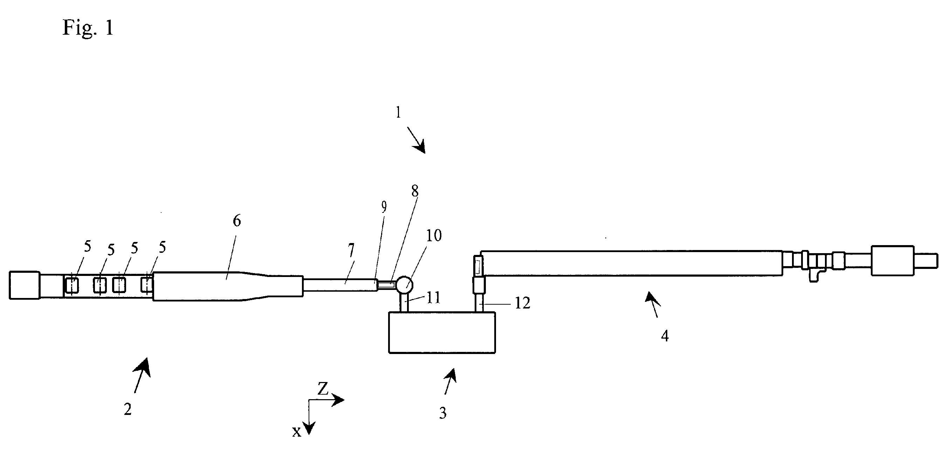

Fig. 1 zeigt eine erste Ausführungsform eines Systems zur Herstellung von Säcken, das als Ganzes mit der Bezugsziffer 1 gekennzeichnet ist. Die wesentlichen Bestandteile des Systems 1 sind eine Schlauchmaschine 2, eine erfindungsgemäße Speichervorrichtung 3 und eine Bodenbildungsvorrichtung 4. Die Schlauchmaschine 2 umfasst als wichtigste Bestandteile mehrere, im Minimalfall eine, Abwicklungen 5. Diese Abwicklungen 5 können mit Wickeln aus Papier- oder Kunststoff bestückt werden. Die Bahnen werden in den Abwicklungen 5 abgewickelt und über nicht dargestellte Umlenk- und Führungselemente der Schlauchbildungsstation 6 zugeführt. Innerhalb dieser Schlauchbildungsstation werden die Kanten der Bahnen aufeinandergelegt und mit sich selbst und/oder mit eventuell anderen vorhandenen Bahnen zusammengefügt. Nach dem Durchlaufen der Schlauchbildungsstation 6 wird der Schlauch in einer Vereinzelungsvorrichtung 7 zu Schlauchstücken 8 vereinzelt, wobei der Schlauch zunächst perforiert wird und anschließend von diesem in einem Abreißwerk, wie es beispielsweise in der DE 44 40 660 C2 gezeigt ist, Schlauchstücke 8 abgerissen werden. Mehrere Schlauchstücke 8 können noch zu einem Schlauchstapel gestapelt werden. Die Längsachsen der Schlauchstücke 8 liegen in ihrer Transportrichtung z.

Die Schlauchstücke 8 werden über eine Transportvorrichtung 9, einen Drehtisch 10 und eine weitere Transportvorrichtung 11 der Speichervorrichtung 3 zugeführt. Auf dem Drehtisch 11 wird die Lage der Längsachsen der Schlauchstücke 8 um 90 Grad gedreht, so dass die Längsachse nun in Richtung x liegt. Innerhalb der Speichervorrichtung 3 werden die Schlauchstücke 8 jedoch wieder in Transportrichtung z transportiert. Die Längsachse der Schlauchstücke 8 liegt also quer zur Transportrichtung z. Innerhalb der Speichervorrichtung 3 werden die Schlauchstücke 8 gespeichert und gleichzeitig gepresst. Auf die Funktionsweise der Speichervorrichtung 3 wird weiter unten eingegangen.

Nach dem Durchlaufen der Speichervorrichtung 3 werden die Schlauchstücke 8 über eine weitere Transportvorrichtung 12 der Bodenbildungsvorrichtung 4 zugeführt, wobei die Schlauchstücke 8 wieder in Richtung ihrer Längsachse, also in -x Richtung transportiert werden. Innerhalb der Bodenbildungsvorrichtung 4, auf deren Funktionsweise nicht näher eingegangen werden soll, werden die Schlauchstücke 8 wieder quer zu ihrer Längsachse in Transportrichtung z transportiert.

Die gezeigte Anordnung der Schlauchmaschine 2, der Speichervorrichtung 3 und der Bodenbildungsvorrichtung 4 wird vorteilhafterweise gewählt, wenn ein System zum Herstellen von Beuteln in einer langen schmalen Fabrikationshalle installiert werden soll. Innerhalb der drei Komponenten des Systems, also der Schlauchmaschine 2, der Speichervorrichtung 3 und der Bodenbildungsvorrichtung 4 liegen die Transportrichtungen der Schlauchstücke 8 im wesentlichen parallel zueinander.

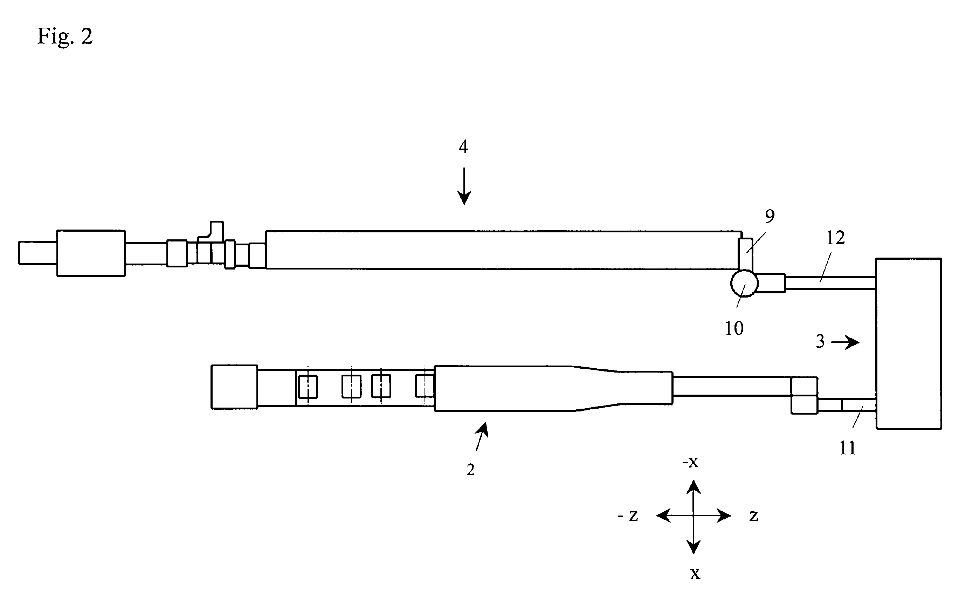

Steht jedoch eine kurze, aber breitere Fabrikationshalle zur Verfügung, so kann die in Fig. 2 gezeigte Ausführung gewählt werden. Im Gegensatz zu dem in der Figur 1 gewählten System liegt die Transportrichtung der Schlauchstücke 8 innerhalb der Speichervorrichtung 3 nicht in der Transportrichtung z, sondern in der Richtung -x, also quer zur Transportrichtung innerhalb der Schlauchmaschine 2. Äquivalent dazu wäre ein Transport der Schlauchstücke 8 innerhalb der Speichervorrichtung 3 in Richtung x. Auch in dieser Anordnung werden die Schlauchstücke 8 innerhalb der Speichervorrichtung 3 quer zu ihrer Längsachse transportiert. Gleichwohl ist darauf hinzuweisen, dass die Längsachse der Schlauchstücke auch parallel zur Transportrichtung liegen kann.

An die Speichervorrichtung 3 schließen sich eine Transportvorrichtung 9, ein Drehtisch 10 und eine weitere Transportvorrichtung 11 an, die die Schlauchstücke der Bodenbildungsvorrichtung 4 zuführen. Die Transportrichtung (in dem dargestellten Fall die Richtung -z) der Schlauchstücke 8 in der Bodenbildungsvorrichtung 4 liegt wiederum quer zu der Transportrichtung x, -x der Schlauchstücke 8 in der Speichervorrichtung 3.

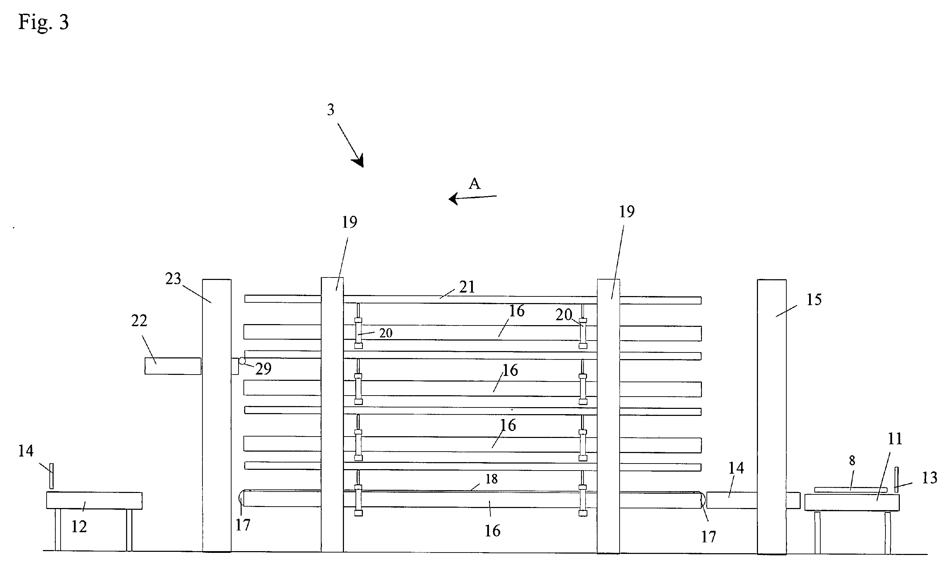

Die Figur 3 zeigt eine Seitenansicht einer erfindungsgemäßen Speichervorrichtung 3. Die Schlauchstücke 8 werden über die Transportvorrichtung 11 an die Speichervorrichtung 3 herangebracht. Mit einem Querschieber 13 werden die Schlauchstücke 8 auf eine als Hubtisch 14 ausgebildete Beschickungs- und Entnahmevorrichtung verbracht. Dieser Hubtisch 14 ist auf nicht näher beschriebene Weise entlang der Vertikalstütze 15 verfahrbar. Hat der Hubtisch 14 die Höhe der Etage 16 erreicht, auf welcher die Schlauchstücke 8 abgelegt werden sollen, so wird das Schlauchstück 8 übergeben. Dazu ist der Hubtisch 14 mit nicht sichtbaren Förderbändern ausgestattet, welche die Schlauchstücke 8 in die mit A bezeichnete Transportrichtung transportiert. Zur Überbrückung des Spaltes zwischen dem Hubtisch 14 und der Etage 16 ist am Hubtisch eine Bürstenwalze 29 angeordnet. Die Etagen 16 sind mit Umlenkwalzen oder -rollen 17 ausgestattet, welche auf nicht näher dargestellte Weise angetrieben werden und jeweils zumindest ein Förderband 18 führen. Die Umlenkwalzen 17 und Förderbänder 18 sind exemplarisch nur an der untersten Etage 16 eingezeichnet. Die Förderbänder 18 transportieren die Schlauchstücke 8 in Richtung A nach der Übernahme von dem Hubtisch 14 so lange, bis sie den Hubtisch 14 vollständig verlassen haben. Die Schlauchstücke 8 werden jedoch erst dann weiter- oder gegebenenfalls zurücktransportiert, wenn auf der gleichen Etage 16 weitere Schlauchabschnitte 8 abgelegt werden sollen und/oder die abgelegten Schlauchabschnitte 8 der weiterverarbeitenden Vorrichtung zugeführt werden sollen. Die Etagen 16 sind an Stützen 19 gestellfest angebracht. Zum Verpressen der Schlauchstücke 8 sind seitlich an den Etagen 16 Aktuatoren 20 angebracht, auf welchen sich die Pressplatten 21 abstützen. Die Aktuatoren 20 können also die entsprechende Pressplatte 21 anheben, wenn Schlauchstücke 8 entlang der gewünschten Etage 16 transportiert werden sollen. Zum Verpressen der Schlauchstücke 8 werden die Aktuatoren 20 also eingefahren, so dass die Pressplatten 21 durch ihr Eigengewicht die Schlauchstücke 8 verpressen. In der Figur 3 ist zwar nur eine Pressplatte 21 pro Etage 16 dargestellt, jedoch sind auch mehrere Pressplatten pro Etage 16 denkbar, so dass Schlauchstücke 8 oder Stapel aus Schlauchstücken auch bei verschiedenen Höhen derselben optimal verpresst werden können.

Der Abtransport der Schlauchstücke 8 aus der Speichereinheit erfolgt über eine ebenfalls als Hubtisch 22 ausgebildete Beschickungs- und Entnahmevorrichtung, welcher 22 entlang der Vertikalstrebe 23 verfahrbar ist. Von dem Hubtisch 22 werden die Schlauchstücke an die Transportvorrichtung 12 übergeben.

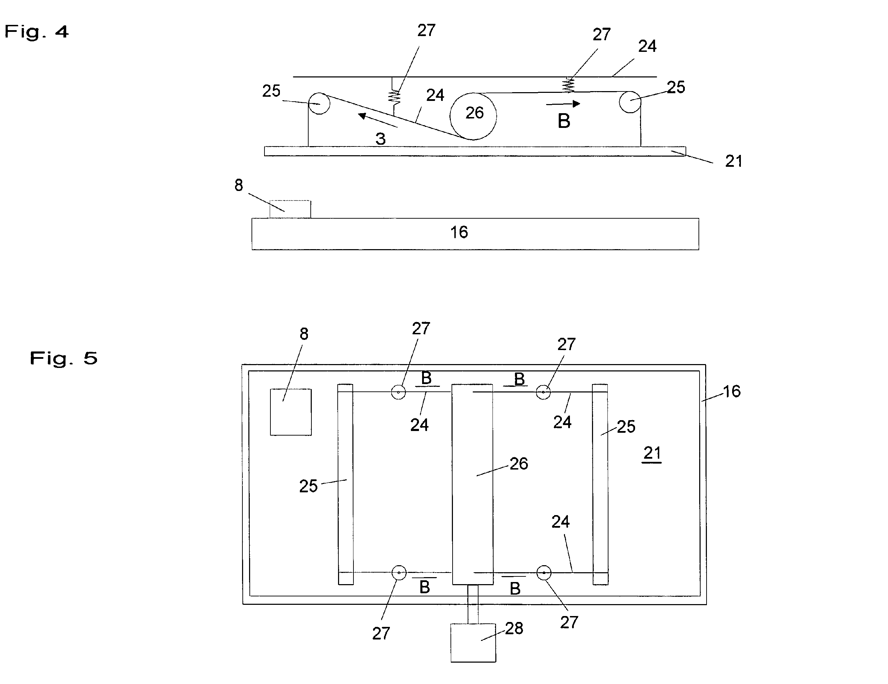

Die Figuren 4 und 5 zeigen schematisch die Bestandteile einer alternativen Ausführungsform einer Vorrichtung zum Anheben oder Absenken einer Presseplatte 21, so dass diese möglichst parallel zur Etage 16 verbleibt, auch wenn sie 21 nur eine außermittige (als "Mitte" ist der Schwerpunkt der Pressplatte anzusehen) Gegenkraft durch das Schlauchstück 8 oder einen Stapel aus Säcken oder Schlauchstücken erfährt. Dazu ist die Pressplatte 21 an vier Seilen 24 aufgehängt. Die Seile 24 verlaufen über Umlenkwalzen oder -rollen 25. Zusätzlich umschlingen Abschnitte der Seile 24 die Wickeltrommel 26, an welcher die Seile 24 auch befestigt sind. Die Wickeltrommel 26 und die Umlenkrollen 25 sind auf nicht gezeigte Weise im Maschinengestell geiagert. An der oberhalb der Vorrichtung angeordneten Etage, welche in den Figuren 4 und 5 nicht gezeigt ist, sind Zugfedern 27 aufgehängt. Die anderen Enden der Zugfedern 27 weisen nicht sichtbare Ösen auf, durch welche die Seile 24 laufen. In dem gezeigten Betriebszustand sind die Zugfedern 27 aus ihrer Ruhelage ausgelenkt.

Wird nun zum Absenken der Pressplatte 21 die Wickeltrommel 26 durch den Motor 28 in Rotation versetzt, so bewegen sich die Seile 24 in Richtung der Pfeile B. Setzt nun die Pressplatte 21 außermittig auf Schlauchstücken 8 oder Säcken auf, so wird das oder werden die entsprechenden Seile 24 nicht mehr in gespanntem Zustand gehalten. Da die Wickeltrommel 26 dennoch alle Seile 24 weiter abwickelt, kann sich die dem nicht mehr gespannten Seil 24 zugeordnete Zugfeder 27 zusammenziehen und so das entsprechende Seil 24 auf Spannung halten. Die Änderung der Auslenkung der Feder gegenüber dem ursprünglichen Zustand wird mit einem geeigneten, aber nicht dargestellten Detektor, beispielsweise einer Lichtschranke, bestimmt. Diese Information wird an die ebenfalls nicht dargestellte Steuervorrichtung übermittelt und von dieser ausgewertet. Bei einer Änderung der Auslenkung von einer oder mehreren Federn wird die Rotation der Wickeltrommel 26 durch die Steuervorrichtung gestoppt, so dass die Pressplatte 21 in einer im Wesentlichen parallel zur Etage 16 verlaufenden Position verbleibt. Ist der Detektor in der Lage, die Größe der Auslenkungsänderung zu bestimmen, kann die Steuerung sogar dafür sorgen, dass die Wickeltrommel 26 in Gegenrichtung rotiert, so dass die Pressplatte eine nahezu exakt parallel zur Etage 16 verlaufende Position einnimmt.

An dieser Stelle wird nochmals darauf hingewiesen, dass es sich bei der geschilderten Ausführungsform nur um eine Möglichkeit handelt, die Pressplatte 21 parallel zur Etage 16 zu halten. Es reicht beispielsweise auch, an verschiedenen Stellen die Absenkstrecke der Pressplatte zu messen. Sobald an den verschiedenen Messpunkten Unterschiede festgestellt werden, kann die Absenkbewegung gestoppt werden. Weiterhin kann alternativ eine Kippbewegung der Pressplatte, etwa mithilfe eines Winkelmessers oder einer Wasserwaage, festgestellt werden.

| **Bezugszeichenliste** | |
|---|---|
| 1 | System zur Herstellung von Säcken |
| 2 | Schlauchmaschine |
| 3 | Speichervorrichtung |
| 4 | Bodenbildungsvorrichtung |
| 5 | Abwicklungen |
| 6 | Schlauchbildungsstation |
| 7 | Vereinzelungsvorrichtung |
| 8 | Schlauchstück |
| 9 | Transportvorrichtung |
| 10 | Drehtisch |
| 11 | Transportvorrichtung |
| 12 | Transportvorrichtung |
| 13 | Querschieber |
| 14 | Hubtisch |
| 15 | Vertikalstütze |
| 16 | Etage |
| 17 | Umlenkwalze |
| 18 | Förderband |
| 19 | Stütze |
| 20 | Aktuatoren |
| 21 | Pressplatten |
| 22 | Hubtisch |
| 23 | Vertikalstütze |
| 24 | Seil |
| 25 | Umlenkrolle |
| 26 | Wickeltrommel |
| 27 | Zugfeder |
| 28 | Motor |
| 29 | Bürstenwalze |
| | |
| A | Transportrichtung innerhalb der Speichervorrichtung |
| B | Bewegungsrichtung der Seile 24 während des Absenkens der Pressplatte 21 |
| x | Transportrichtung der Schlauchstücke |
| y | Transportrichtung der Schlauchstücke |
| z | Transportrichtung der Schlauchstücke |

## Patentansprüche

1. Speichervorrichtung (3) für Säcke oder Schlauchabschnitte (8), welche in der Regel als Stapel der Speichervorrichtung (3) zugeführt werden,
wobei die Speichervorrichtung (3) folgende Merkmale aufweist:
- zumindest zwei Etagen (16), in denen die Säcke oder Schlauchabschnitte (8) gespeichert werden,
- ein erstes Transportsystem zum Bewegen der Säcke oder Schlauchabschnitte (8) in den Etagen (16)
- ein zweites Transportsystem (14,22) zum Heran- und Wegführen von Säcken oder Schlauchabschnitten (8) zu oder von den Etagen (16)
**dadurch gekennzeichnet, dass**
das erste Transportsystem unendliche umlaufende Transportelemente (18) aufweist.

2. Vorrichtung (3) nach Anspruch 1,
**dadurch gekennzeichnet, dass**
die unendlichen umlaufenden Transportelemente (17,18) auf dem Etagenboden (16) angeordnet sind.

3. Vorrichtung (3) nach Anspruch 2,
**dadurch gekennzeichnet, dass**
es sich bei den unendlichen umlaufenden Transportelementen um Förderbänder (18), vorzugsweise um ein Förderband (18), handelt.

4. Vorrichtung (3) nach dem vorstehenden Anspruch,
**dadurch gekennzeichnet, dass**
pro Etage (16) ein Förderband (18) vorgesehen ist, auf welchem die Säcke oder Schlauchabschnitte (8) transportierbar sind.

5. Vorrichtung (3) nach Anspruch 4,
**dadurch gekennzeichnet, dass**
an zumindest einer Übergabestelle zwischen erstem (17,18) und zweitem (14,22) Transportsystem zumindest eine Bürstenwalze (29) vorgesehen ist.

6. Vorrichtung (3) nach einem der drei vorstehenden Ansprüche,
**dadurch gekennzeichnet, dass**
zumindest eines der Förderbänder (18) über eine Trennnaht verfügt, die das Förderband (18) quer zu seiner Transportrichtung durchschneidet und dass ein aus Haken und Ösen bestehendes Verbindungssystem zum Zusammenhalten des Förderbandes (18) an der Trennnaht vorgesehen ist.

7. Vorrichtung (3) nach einem der vorstehenden Ansprüche,
**gekennzeichnet durch**
- Pressmittel (21), welche die Säcke oder Schlauchabschnitte (8) während ihrer Lagerung in den Etagen (16) pressen,
- wobei diese Pressmittel (21) über eine Vorrichtung zur Steuerung ihrer Bewegung verfügen, welche die Pressbewegung unterbricht,
- wenn die Pressmittel (21) von den zu pressenden Säcken oder Schlauchstücken (8) mit Gegenkräften beaufschlagt werden, die über die Anpressfläche der Pressmittel (21) um einen bestimmten Betrag variieren.

8. Vorrichtung (3) nach dem vorstehenden Anspruch,
**dadurch gekennzeichnet,**
**dass** die Pressmittel eine Pressplatte (21) umfassen, welche auf die zu pressenden Säcke oder Schlauchstücke (8) abgesenkt wird,
**dass** Tragemittel (24,25,26) vorgesehen sind, welche an verschiedenen Haltepunkten der Pressplatte (21) angreifen und
**dass** Sensoren vorgesehen sind, mit welchen Werte zu der von der Pressplatte (21) auf die Tragemittel (24,25,26) ausgeübte Kraft an verschiedenen Haltepunkten ermittelbar sind.

9. Vorrichtung (3) nach dem vorstehenden Anspruch,
**dadurch gekennzeichnet,**
- **dass** die Tragemittel (24,25,26) eine Welle (26) umfassen, mit der zumindest ein Tragriemen oder ein Tragseil (24) aufwickelbar ist und
- **dass** der Tragriemen oder das Tragseil (24) an einem Haltepunkt der Pressplatte (21) angreift.

10. Vorrichtung (3) nach einem der vorstehenden Ansprüche,
**gekennzeichnet durch**
- Pressmittel (21), welche die Säcke oder Schlauchabschnitte (8) während ihrer Lagerung in den Etagen (16) im Zusammenwirken mit einer Gegenlage (16) pressen
- wobei diese Pressmittel (21) über eine Vorrichtung zur Regelung ihrer Bewegung verfügen, die diese Bewegung derart regelt, dass die Anpressfläche der Pressplatte (21) innerhalb eines Toleranzbereichs parallel zu ihrer Gegenlage (16) verbleibt.

11. Vorrichtung (3) nach dem vorstehenden Anspruch,
**dadurch gekennzeichnet,**
- **dass** die Gegenlage (16) waagerecht verläuft und
- **dass** die Vorrichtung zur Regelung der Bewegung der Pressplatte (21) über Sensoren verfügt, mit welchen die waagerechte Ausrichtung der Pressplatte (21) in zumindest einer Raumrichtung kontrollierbar ist.

12. Vorrichtung (3) nach einem der vorstehenden Ansprüche,
**gekennzeichnet durch**
zumindest zwei Transportsysteme (14,22) zum Heran- und Wegführen von Säcken oder Schlauchabschnitten (8) zu und/oder von den Etagen (16).

13. Vorrichtung (3) nach einem der vorstehenden Ansprüche,
**dadurch gekennzeichnet, dass**
die Abmaße zumindest einer Etage (16) der Speichervorrichtung (3) in der Raumrichtung (x) quer zu der Transportrichtung (A) der Säcke oder Schlauchstücke (8) in der Transportvorrichtung zumindest die Lagerung zweier Säcke oder Schlauchstücke (8) zulässt, welche in der Raumrichtung (x) quer zu ihrer Transportrichtung (A) aufeinander abfolgen.

14. Vorrichtung (3) nach einem der vorstehenden Ansprüche,
**dadurch gekennzeichnet, dass**
das zweite Transportsystem oder die zweiten Transportsysteme einen Hubtisch (14,22) umfasst, der Abmaße in der Raumrichtung (x) quer zu der Transportrichtung (A) der Säcke oder Schlauchstücke (8) in der Transportvorrichtung (14,22,17,18) zumindest die Lagerung zweier Säcke oder Schlauchstücke (8) zulässt, welche in der Raumrichtung quer (x) zu ihrer Transportrichtung (A) aufeinander abfolgen.

15. Verfahren zur Lagerung von Schlauchstücken oder Säcken mit einer Vorrichtung (3) nach einem der vorstehenden Ansprüche.

16. Verfahren nach dem vorstehenden Anspruch, bei dem eine Speichervorrichtung (3) verwendet wird, bei der an zumindest einer Übergabestelle zwischen erstem und zweitem Transportsystem zumindest eine Bürstenwalze (29) vorgesehen ist, welche mit einer Umfangsgeschwindigkeit angetrieben wird, die der Umfangsgeschwindigkeit zumindest eines benachbarten unendlichen umlaufenden Transportsystems (14,17,18,22) entspricht.
